# EUROPEAN PATENT APPLICATION

(11) **EP 4 615 156 A1**
(43) Date of publication of application: **10.09.2025**
(21) Application number: 22963784.8
(22) Date of filing: 31.10.2022
(51) Int. Cl.: H04W 80/00, H04L 1/00

(54) **ASSOCIATION IDENTIFIER ALLOCATION METHOD, RECEIVING METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/128786
(87) International publication number: WO 2024/092465

(57) **Abstract**

Embodiments of the present disclosure relate to the technical field of mobile communications, and provide an association identifier allocation method, a receiving method, an electronic device, and a storage medium. The association identifier allocation method is applied to an access point device, and the method comprises: determining a first radio frame, the first radio frame comprising identification information, and the identification information comprising association identifiers (AIDs) that are allocated to a station device and that are on the sub 7 GHz band and on the 45 GHz band and/or the 60 GHz band; and sending the first radio frame.

## Description

### TECHNICAL FIELD

The embodiments of the present disclosure relate to the field of mobile communication technology. Specifically, the embodiments of the present disclosure relate to an association identifier allocation method, a receiving method, an electronic device, and a storage medium.

### BACKGROUND

With the rapid development of mobile communication technology, Wireless Fidelity (Wi-Fi) technology has made great progress in transmission rate and throughput. At present, Wi-Fi technology is researching content such as Ultra High Reliability (UHR), and its vision is to improve the reliability of Wireless Local Area Networks (WLAN) connections, reduce latency, improve manageability, increase throughput at different signal to noise ratio (SNR) levels, and reduce device-level power consumption.

Currently, UHR supports simultaneous communication in the sub 7 GHz + the 45 GHz (gigahertz) and/or the 60 GHz bands (at least one of sub 7 GHz + 45 GHz and sub 7 GHz + 60 GHz); therefore, the process of simultaneous communication in the sub 7 GHz + 45 GHz and/or the 60 GHz bands needs to be improved to further improve UHR.

### SUMMARY

The embodiments of the present disclosure provide an association identifier allocation method, a receiving method, an electronic device, and a storage medium to improve the process of communicating simultaneously in the sub 7 GHz+45GHz and/or the 60GHz frequency bands.

In one aspect, an embodiment of the present disclosure provides a method for allocating an association identifier, which is applied to an access point device. The method includes:
determining a first radio frame; wherein the first radio frame includes identification information, and the identification information includes an association identifier AID allocated to a station device in a sub 7 GHz frequency band and in a 45 GHz and/or a 60 GHz frequency band; and
sending the first radio frame.

In another aspect, an embodiment of the present disclosure further provides a method for receiving an association identifier, which is applied to a station device, and the method includes:
receiving a first radio frame; wherein the first radio frame includes identification information, and the identification information includes an association identifier AID allocated to the station device by an access point device in a sub 7 GHz frequency band and in a 45 GHz and/or a 60 GHz frequency band.

In another aspect, an embodiment of the present disclosure further provides an electronic device, wherein the electronic device is an access point device, and the electronic device includes:
a determining module, configured to determine a first radio frame; wherein the first radio frame includes identification information, and the identification information includes an association identifier AID allocated to a station device in a sub 7 GHz frequency band and in a 45 GHz and/or a 60 GHz frequency band; and
a sending module, configured to send the first radio frame.

In another aspect, an embodiment of the present disclosure further provides an electronic device, the electronic device is a station device, and the electronic device includes:
a receiving module, configured to receive a first radio frame; wherein the first radio frame includes identification information, and the identification information includes an association identifier AID allocated to the station device by an access point device in a sub 7 GHz frequency band and in a 45 GHz and/or a 60 GHz frequency band.

The embodiments of the present disclosure also provide an electronic device, including a memory, a processor, and a computer program stored in the memory and executable on the processor, wherein when the processor executes the program, one or more methods described in the embodiments of the present disclosure are implemented.

The embodiments of the present disclosure further provide a computer-readable storage medium, on which a computer program is stored. When the computer program is executed by a processor, one or more of the methods described in the embodiments of the present disclosure are implemented.

In the disclosed embodiment, the AP determines and sends a first radio frame; wherein the first radio frame includes identification information, and the identification information carries an associated identification AID allocated to the station device in the sub 7 GHz frequency band and in the 45GHz and/or the 60GHz frequency band, thereby achieving communication in the sub 7 GHz and 45GHz and/or the 60GHz bands at the same time, meeting the requirements of the UHR.

Additional aspects and advantages of the embodiments of the present disclosure will be partially given in the description below, which will become apparent from the description below, or will be learned through the practice of the present disclosure.

### BRIEF DESCRIPTION OF THE DRAWINGS

In order to more clearly illustrate the technical solutions of the embodiments of the present disclosure, the drawings required for use in the description of the embodiments of the present disclosure will be briefly introduced below. Obviously, the drawings in the following description are only some embodiments of the present disclosure. For those of ordinary skill in the art, other drawings can be obtained based on these drawings without creative effort.
FIG. 1 is a flow chart of a method for allocating an association identifier provided by an embodiment of the present disclosure;
FIG. 2 is a first schematic diagram of a first example of an embodiment of the present disclosure;
FIG. 3 is a second schematic diagram of the first example of the embodiment of the present disclosure;
FIG. 4 is a flow chart of a method for receiving an association identifier provided by an embodiment of the present disclosure;
FIG. 5 is a first schematic diagram of a structure of an electronic device provided by an embodiment of the present disclosure;
FIG. 6 is a second schematic diagram of the structure of the electronic device provided in an embodiment of the present disclosure; and
FIG. 7 is a third schematic diagram of the structure of the electronic device provided in the embodiment of the present disclosure.

### DETAILED DESCRIPTION

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The term "plurality" in the embodiments of the present disclosure refers to two or more than two, and other quantifiers are similar thereto.

Exemplary embodiments will be described in detail herein, examples of which are shown in the accompanying drawings. Unless otherwise indicated, when the following description refers to the drawings, the same numbers in different drawings represent the same or similar elements. The embodiments described in the following exemplary embodiments do not represent all embodiments consistent with the present invention. Instead, they are merely examples of devices and methods consistent with some aspects of the present invention as detailed in the appended claims.

The terms used in this disclosure are for the purpose of describing specific embodiments only and are not intended to limit the disclosure. The singular forms "a", "an", and "the" used in this disclosure and the appended claims are also intended to include the plural forms unless the context clearly indicates otherwise. It should also be understood that the term "and/or" as used herein refers to and includes any or all possible combinations of one or more of the associated listed items; for example, "A and/or B" includes: (1) A; (2) B; (3) A and B.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "at the time of" or "when" or "in response to determining".

Hereinafter, the technical solutions in the embodiments of the present disclosure will be clearly and completely described in conjunction with the drawings in the embodiments of the present disclosure. Obviously, the described embodiments are only part of the embodiments of the present disclosure, not all of the embodiments. Based on the embodiments in the present disclosure, all other embodiments obtained by those of ordinary skill in the art without creative effort are within the scope of protection of the present disclosure.

The embodiments of the present disclosure provide an association identifier allocation method, a receiving method, an electronic device and a storage medium to improve the process of communicating simultaneously in the sub 7 GHz+45GHz and/or the 60GHz frequency bands.

In the disclosure, the method and the device are based on the same application concept. Since the method and the device solve the problem in a similar principle, the implementation of the device and the method can refer to each other, and the repeated parts will not be repeated.

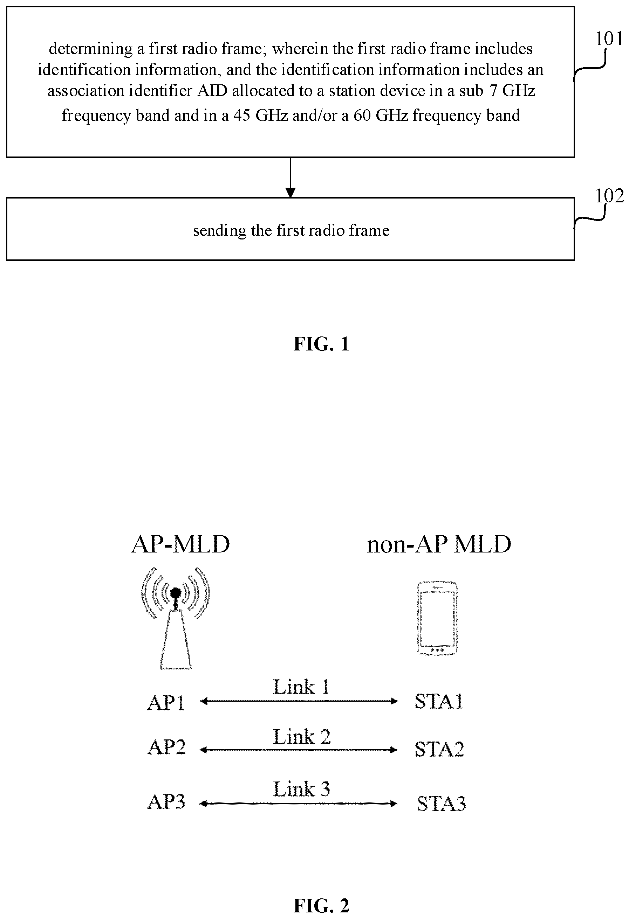

As shown in FIG. 1, an embodiment of the present disclosure provides a method for allocating an association identifier. Optionally, the method may be applied to an access point (AP) device, such as a device having a wireless to wired bridging function.

The method may include the following steps:
Step 101, determining a first radio frame; wherein the first radio frame includes identification information, and the identification information includes an association identifier AID allocated to a station device in a sub 7 GHz frequency band and in a 45 GHz and/or a 60 GHz frequency band.

In a wireless LAN, a Basic Service Set (BSS) can be formed by an AP and one or more stations (STA) that communicate with the AP. A Basic Service Set can be connected to a Distribution System (DS) through its AP, and then connected to another Basic Service Set to form an Extended Service Set (ESS). The AP is responsible for extending the services provided by the wired network to the wireless network; and the STAs, such as the electronic devices with wireless network access capabilities, provide frame delivery services to enable the transmission of information.

In the embodiment of the present disclosure, the AP and the STA may be devices supporting multiple connections, for example, they may be represented as AP MLD and non-AP MLD, respectively. For ease of description, hereinafter, the example in which an AP communicates with a STA under multiple connections is generally described, however, the exemplary embodiments of the present disclosure are not limited thereto.

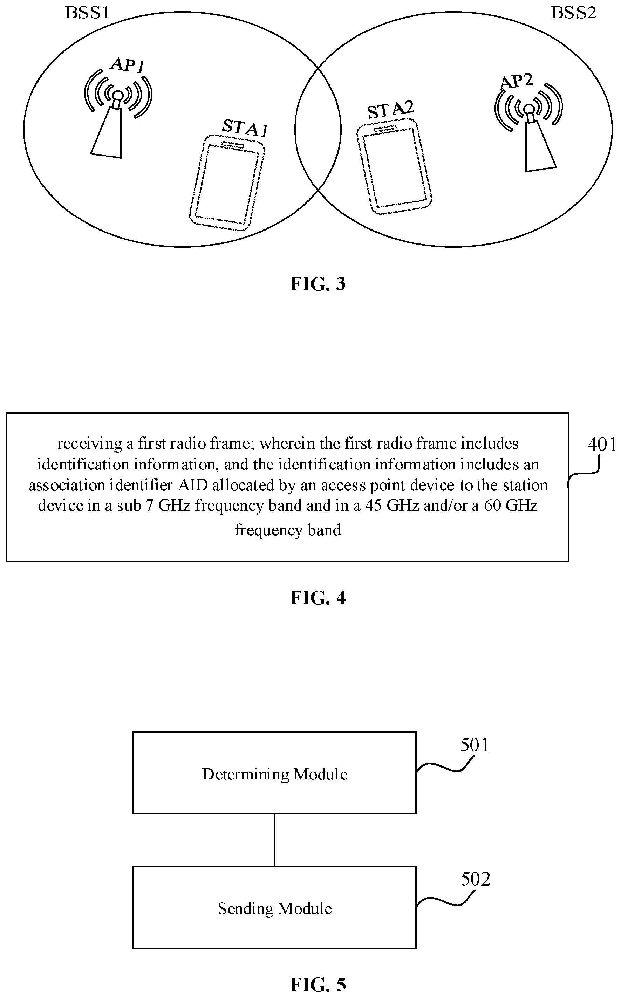

As a first example, referring to FIG. 2 and FIG. 3, the AP MLD may represent an access point supporting a multi-connection communication function, and the non-AP MLD may represent a station supporting a multi-connection communication function.

Referring to FIG. 2, the AP MLD may include three subordinate APs, such as AP1, AP2, and AP3 as shown in FIG. 2; each AP may operate in connection 1, connection 2, and connection 3, respectively; the non-AP MLD may also include three subordinate STAs, such as STA1, STA2, and STA3 as shown in FIG. 2; STA1 operates in connection 1, STA2 operates in connection 2, and STA3 operates in connection 3. In FIG. 3, AP1 and STA1 form BSS1, and AP2 and STA2 form BSS2. In the example of FIG. 2, it is assumed that AP1 and STA1 communicate through the corresponding first connection Link 1, similarly, AP2 and STA2 communicate through the corresponding second connection Link 2, and AP communicates with STA3 through the third connection Link 3. In addition, Link 1 to Link 3 may be multiple connections at different frequencies, for example, connections at 2.4 GHz, 5 GHz, and 6 GHz, or several connections of the same or different bandwidths at 2.4 GHz. In addition, multiple channels may exist under each connection. It is understandable that the communication scenario shown in FIG. 2 is merely exemplary and the present disclosure is not limited thereto. For example, an AP MLD may be connected to multiple (more than three) non-AP MLDs, or in each connection, an AP may communicate with multiple other types of stations.

In an embodiment of the present disclosure, an AP and an STA support communication in sub 7 GHz + 45 GHz (and/or the 60 GHz) frequency bands at the same time; the AP determines a first radio frame, wherein the first radio frame includes identification information, wherein the identification information includes an association identifier (AID) allocated to a station device in the sub 7 GHz frequency band and in the 45 GHz and/or the 60 GHz frequency band; that is, the identification information includes an AID allocated to the STA in the sub 7 GHz frequency band (hereinafter referred to as AID-1 for ease of description) and an AID in the 45 GHz / the 60 GHz frequency band (hereinafter referred to as AID-2 for ease of description). The AID may be a unique identifier of the STA in the BSS.

AID-1 and AID-2 may be the same AID or two AIDs. When AID-1 and AID-2 are the same AID, AID-1 and AID-2 may be 16 bits; when AID-1 and AID-2 are different AIDs, AID-1 may be 16 bits and AID-2 may be 8 bits.

Optionally, as a second example, the first radio frame may be an association response (Probe Response) frame, and the association response frame format is shown in the following Table 1:

**Table 1:**

| Order | Information | |
|---|---|---|
| 1 | Capability Information | See 9.4.1.4 (Capability Information field) for Capability |
| 2 | Status Code(#1780) | |
| 3 | AID | This field is not present when dot 11 S1G Optionlmplemented is true |
| 4 | Supported Rates and BSS | (#1659)If dot 11 SIG Optionlmplemented or dot 11 DMG Optionlmplemented is true, this element ought not be present unless one or more BSS membership selectors (see 11.1.4.6 (Operation of Supported Rates and BSS Membership Selectors element and Extended Supported Rates and BSS Membership Selectors clement) are indicated.(#24) |

As shown in Table 1, the Order 3 field carries the AID, and the length of the AID can be 1 to 6 bits.

Step 102, sending the first radio frame.

The AP sends the first radio frame, so that the STA communicates simultaneously in the sub 7 GHz frequency band and in the 45 GHz and/or the 60 GHz frequency band according to the AID, meeting the UHR requirement.

It is understood that in the embodiments of the present disclosure, the term "and/or" refers to and includes any or all possible combinations of one or more associated listed items; for example, "A and/or B" includes: A, B, A and B; specifically, the simultaneous communication at sub 7 GHz and 45 GHz and/or the 60 GHz mentioned in the embodiments of the present disclosure includes at least one of the following scenarios (1) to (3):
Scenario (1) Communication in sub 7 GHz and 45GHz bands;
Scenario (2) Communication in sub 7 GHz and 60GHz bands;
Scenario (3) Communication in sub 7 GHz and 45 GHz bands, and communication in sub 7 GHz and 60 GHz bands.

An embodiment of the present disclosure provides a method for allocating an association identifier. Optionally, the method may be applied to an AP, such as a device having a wireless to wired bridging function.

The method may include the following steps:
determining a first radio frame; wherein the first radio frame includes identification information, and the identification information includes an association identifier AID allocated to a station device in a sub 7 GHz frequency band and in a 45 GHz and/or a 60 GHz frequency band, wherein,
the identification information includes a first AID, where the first AID is an AID in a sub 7 GHz frequency band and in a 45 GHz and/or a 60 GHz frequency band; and
sending the first radio frame.

In the embodiment, the same AID (i.e., the first AID) is used to identify the AIDs in the sub 7 GHz band and in the 45 GHz and/or the 60 GHz bands. The first AID may occupy a length of 16 bits. However, when the AP assigns a value to the first AID, if the value is less than or equal to 255, 8 bits of the 16 bits are used to identify the first AID.

An embodiment of the present disclosure provides a method for allocating an association identifier. Optionally, the method may be applied to an AP, such as a device having a wireless to wired bridging function.

The method may include the following steps:
determining a first radio frame; wherein the first radio frame includes identification information, and the identification information includes an association identifier AID allocated to a station device in a sub 7 GHz frequency band and in a 45 GHz and/or a 60 GHz frequency band, wherein,

The identification information includes a second AID and a third AID, wherein the second AID is an AID in a sub 7 GHz frequency band, and the third AID is an AID in a 45 GHz and/or a 60 GHz frequency band.

Send the first radio frame.

In the embodiment, two AIDs (the second AID and the third AID) are used to identify the AIDs in the sub 7 GHz band and in the 45GHz and/or the 60GHz bands respectively. The second AID can occupy a length of 16 bits, and the third AID can occupy a length of 8 bits. However, when the AP assigns a value to the second AID, if its value is less than or equal to 255, then 8 bits of the 16 bits are used to identify the second AID.

Optionally, the third AID is carried in a multi-link information element, a bandwidth information element or a neighbor report information element.

As a third example, the neighbor report information element format is shown in the following Table 2:

**Table 2:**

| Content | Element ID | Length | BSS ID | BSS ID Info. | Operating Class | Channel Number | PHY Type | Optional Sub element |
|---|---|---|---|---|---|---|---|---|
| Octets | 1 | 1 | 1 | 2 | | | variable | variable |

In the embodiment, the third AID may be carried in the BSSID information field.

An embodiment of the present disclosure provides a method for allocating an association identifier. Optionally, the method may be applied to an AP, such as a device having a wireless to wired bridging function.

The method may include the following steps:
determining a first radio frame; wherein the first radio frame includes identification information, and the identification information includes an association identifier AID allocated to a station device in a sub 7 GHz frequency band and in a 45 GHz and/or a 60 GHz frequency band, wherein,
the identification information includes a second AID and a third AID, the second AID is an AID in the sub 7 GHz frequency band, and the third AID is an AID in the 45 GHz and/or the 60 GHz frequency band; the third AID is carried in a multi-link information element, a bandwidth information element, or a neighbor report information element; and
sending the first radio frame.

In the embodiment, the neighbor report information element includes a first identifier, and the first identifier indicates whether the third AID exists in the neighbor report information element. As a fourth example, the first identifier can be carried in a reserved field of the BSSID information field, as shown in the following Table 3:

**Table 3:**

| Content | High Efficiency | ER BSS | Co-Located AP | Unsolicited Probe Responses Active | Members Of ESS With 2.4/5 GHz Co-Located AP | OCT Supported With Reporting AP | Co-Located With 6 GHz AP | Reserved |
|---|---|---|---|---|---|---|---|---|
| Bits | 1 | 1 | 1 | 1 | 1 | 1 | 1 | 12 |
| Bits order | B14 | B15 | B16 | B17 | B18 | B19 | B20 | B21 tc B31 |

In an optional embodiment, the first AID and/or the third AID further includes:
a connection identifier of a target connection in the 45 GHz and/or the 60 GHz frequency band;
   and/or
parameter information of the target connection.

In the embodiment, the first AID and/or the third AID further include: the connection identifier of the target connection of each AID in the 45GHz and/or the 60GHz frequency band and/or the parameter information of the target connection; for example, the first AID and/or the third AID include the AID in the 45GHz band, then the first AID and/or the third AID correspondingly include the connection identifier of the target connection of the AID in the 45GHz band and/or the parameter information of the target connection. The first AID and/or the third AID include the AID in the 60GHz band, then the first AID and/or the third AID correspondingly include the connection identifier of the target connection of the AID in the 60GHz band and/or the parameter information of the target connection.

In an optional embodiment, the method further includes:
receiving a second radio frame in the sub 7 GHz frequency band; wherein the second radio frame includes at least one of:
a second identifier, the connection identifier, and the parameter information;
wherein the second identifier indicates that the station device supports communication in the 45 GHz and/or the 60 GHz frequency bands.

The second radio frame includes an association request frame. The STA sends the second radio frame to the AP in the sub 7 GHz frequency band; the second radio frame includes a second identifier, and the second identifier indicates that the station device supports communication in the 45GHz and/or the 60GHz frequency bands, that is, reports to the AP its ability to support communication in the sub 7 GHz and 45GHz and/or the 60GHz frequency bands at the same time. The second radio frame includes the connection identifier, for example, in the multi-link information element of the second radio frame, the link identifier corresponding to the link of the 45GHz and/or the 60GHz spectrum of each SAT is included. The second radio frame includes parameter information of each connection, such as the Media Access Control (MAC) address and other information.

In the disclosed embodiment, the AP determines and sends a first radio frame; wherein the first radio frame includes identification information, and the identification information carries the associated identification AID allocated to the station device in the sub 7 GHz frequency band and in the 45 GHz and/or the 60 GHz frequency band, thereby achieving communication in sub 7 GHz and 45 GHz and/or the 60 GHz at the same time, meeting the requirements of UHR.

Referring to FIG. 4, an embodiment of the present disclosure provides a method for receiving an association identifier. Optionally, the method may be applied to a network device, which may be a station device. The method may include the following steps:
Step 401, receiving a first radio frame; wherein the first radio frame includes identification information, and the identification information includes an association identifier AID allocated by an access point device to the station device in a sub 7 GHz frequency band and in a 45 GHz and/or a 60 GHz frequency band.

The architecture of the WLAN to which the association identifier receiving method provided in the embodiment of the present disclosure is applied refers to the aforementioned first example and will not be described in detail here.

The AP and the STA support communication in sub 7 GHz + 45 GHz (and/or the 60 GHz) frequency bands at the same time; the STA receives a first radio frame, wherein the first radio frame includes identification information, wherein the identification information includes an association identifier (AID) allocated by the AP to the STA in the sub 7 GHz frequency band and in the 45 GHz and/or the 60 GHz frequency band; that is, the identification information includes an AID allocated to the STA in the sub 7 GHz frequency band (hereinafter referred to as AID-1 for ease of description) and an AID in the 45 GHz / the 60 GHz frequency band (hereinafter referred to as AID-2 for ease of description). The AID may be a unique identifier of the STA in the BSS.

AID-1 and AID-2 may be the same AID or two AIDs. When AID-1 and AID-2 are the same AID, AID-1 and AID-2 may be 16 bits; when AID-1 and AID-2 are different AIDs, AID-1 may be 16 bits and AID-2 may be 8 bits.

Optionally, as a second example, the first radio frame may be an association response (Probe Response) frame, and the association response frame format is shown in the following Table 1:

**Table 1:**

| Order | Information | |
|---|---|---|
| 1 | Capability Information | See 9.4.1.4 (Capability Information field) for Capability |
| 2 | Status Code(#1780) | |
| 3 | AID | This field is not present when dot 11 S1G Optionlmplemented is true |
| 4 | Supported Rates and BSS | (#1659)If dot 11 SIG Optionlmplemented or dot 11 DMG Optionlmplemented is true, this element ought not be present unless one or more BSS membership selectors (see 11.1.4.6 (Operation of Supported Rates and BSS Membership Selectors element and Extended Supported Rates and BSS Membership Selectors clement) are indicated.(#24) |

As shown in Table 1, the Order 3 field carries the AID, and the length of the AID can be 1 to 6 bits.

The STA receives the first radio frame and communicates simultaneously in the sub 7 GHz frequency band and in the 45 GHz and/or the 60 GHz frequency band according to the AID in the first radio frame, meeting the requirements of the UHR.

Referring to FIG. 5, based on the same principle as the association identifier allocation method provided in the embodiment of the present disclosure, the embodiment of the present disclosure further provides an electronic device, the electronic device is an access point device, and the electronic device includes:
a determining module 501, configured to determine a first radio frame; wherein the first radio frame includes identification information, and the identification information includes an association identifier AID allocated to a station device in a sub 7 GHz frequency band and in a 45 GHz and/or a 60 GHz frequency band; and
a sending module 502, configured to send the first radio frame.

In an optional embodiment, the identification information includes a first AID, where the first AID is an AID in a sub 7 GHz frequency band and in a 45 GHz and/or a 60 GHz frequency band;
or
the identification information includes a second AID and a third AID, wherein the second AID is an AID in a sub 7 GHz frequency band, and the third AID is an AID in a 45 GHz and/or a 60 GHz frequency band.

In an optional embodiment, the third AID is carried in a multi-link information element, a bandwidth information element or a neighbor report information element.

In an optional embodiment, the neighbor report information element includes a first identifier, and the first identifier indicates whether the third AID exists in the neighbor report information element.

In an optional embodiment, the first AID and/or the third AID further includes:
a connection identifier of a target connection in the 45 GHz and/or the 60 GHz frequency band;
   and/or
parameter information of the target connection.

In an optional embodiment, the electronic device further includes:
a second receiving module, configured to receive a second radio frame in the sub 7 GHz frequency band; wherein the second radio frame includes at least one of:
a second identifier, the connection identifier, and the parameter information;
the second identifier indicates that the station device supports communication in the 45 GHz and/or the 60 GHz frequency bands.

In an optional embodiment, the second radio frame includes an association request frame.

In an optional embodiment, the first radio frame includes an association response frame.

The present disclosure also provides an association identifier allocation method and a receiving device, which are applied to an access point device, and the device includes:
a radio frame determining module, configured to determine a first radio frame; wherein the first radio frame includes identification information, the identification information including an association identifier AID allocated to a station device in a sub 7 GHz frequency band and in a 45 GHz and/or a 60 GHz frequency band; and
a radio frame sending module, configured to send the first radio frame.

The device also includes other modules of the electronic device in the aforementioned embodiment, which will not be described in detail here.

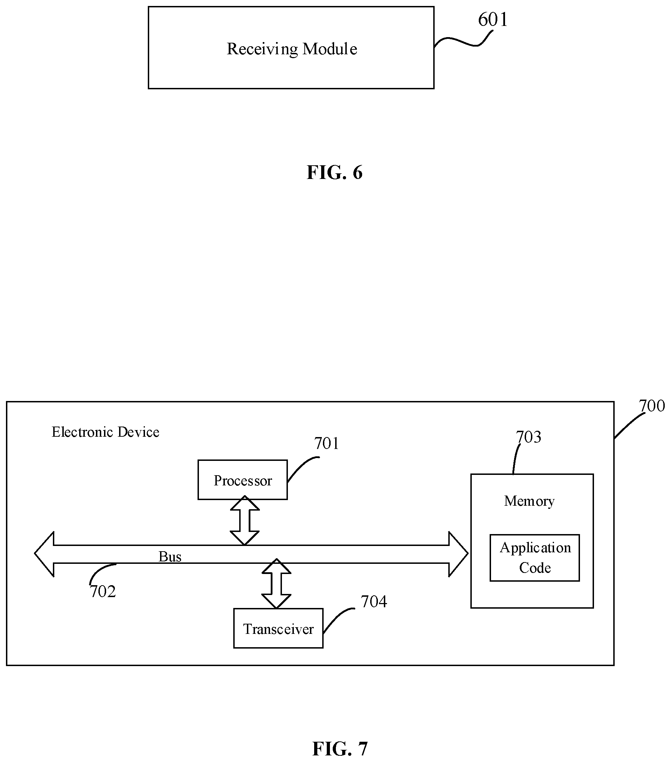

Referring to FIG. 6, based on the same principle as the association identification receiving method provided in the embodiment of the present disclosure, the embodiment of the present disclosure further provides an electronic device, the electronic device is an access point device, and the electronic device includes:
a receiving module 601, configured to receive a first radio frame; wherein the first radio frame includes identification information, and the identification information includes an association identifier AID allocated by the access point device to the station device in the sub 7 GHz frequency band and in the 45GHz and/or the 60GHz frequency band.

In an optional embodiment, the identification information includes a first AID, where the first AID is an AID in a sub 7 GHz frequency band and in a 45 GHz and/or a 60 GHz frequency band;
or
the identification information includes a second AID and a third AID, wherein the second AID is an AID in a sub 7 GHz frequency band, and the third AID is an AID in a 45 GHz and/or a 60 GHz frequency band.

In an optional embodiment, the third AID is carried in a multi-link information element, a bandwidth information element or a neighbor report information element.

In an optional embodiment, the neighbor report information element includes a first identifier, and the first identifier indicates whether the third AID exists in the neighbor report information element.

In an optional embodiment, the first AID and/or the third AID further includes:
a connection identifier of a target connection in the 45 GHz and/or the 60 GHz frequency band;
   and/or
parameter information of the target connection.

In an optional embodiment, the electronic device further includes:
a second determining module, configured to determine a second radio frame; wherein the second radio frame includes at least one of:
a second identifier, the connection identifier, and the parameter information;
the second identifier indicates that the station device supports communication in the 45 GHz and/or the 60 GHz frequency bands.

In an optional embodiment, the second radio frame includes an association request frame.

In an optional embodiment, the first radio frame includes an association response frame.

The present disclosure also provides an association identifier receiving device, which are applied to an access point device, and the device includes:
a radio frame receiving module, configured to receive a first radio frame; wherein the first radio frame includes identification information, the identification information including an association identifier AID allocated by the access point device to the station device in a sub 7 GHz frequency band and in a 45 GHz and/or a 60 GHz frequency band.

The device also includes other modules of the electronic device in the aforementioned embodiment, which will not be described in detail here.

In an optional embodiment, the embodiment of the present disclosure further provides an electronic device, as shown in FIG. 7, the electronic device 700 shown in FIG. 7 may be a server, including: a processor 701 and a memory 703. The processor 701 and the memory 703 are connected, e.g., through a bus 702. Optionally, the electronic device 700 may further include a transceiver 704. It should be noted that in actual applications, the transceiver 704 is not limited to one, and the structure of the electronic device 700 does not constitute a limitation on the embodiment of the present disclosure.

The processor 701 may be a CPU (Central Processing Unit), a general-purpose processor, a DSP (Digital Signal Processor), an ASIC (Application Specific Integrated Circuit), an FPGA (Field Programmable Gate Array) or other programmable logic devices, transistor logic devices, hardware components or any combination thereof. It may implement or execute various exemplary logic blocks, modules and circuits described in conjunction with the disclosure of the present invention. The processor 701 may also be a combination that implements computing functions, such as a combination of one or more microprocessors, a combination of a DSP and a microprocessor, or the like.

The bus 702 may include a path for transmitting information between the above components. The bus 702 may be a PCI (Peripheral Component Interconnect) bus or an EISA (Extended Industry Standard Architecture) bus, or the like. The bus 702 may be divided into an address bus, a data bus, a control bus, and the like. For ease of representation, FIG. 7 only uses one thick line, but does not mean that there is only one bus or one type of bus.

The memory 703 may be a ROM (Read Only Memory) or other types of static storage devices that can store static information and instructions, a RAM (Random Access Memory) or other types of dynamic storage devices that can store information and instructions, or an EEPROM (Electrically Erasable Programmable Read Only Memory), a CD-ROM (Compact Disc Read Only Memory) or other optical disk storage, optical disk storage (including compressed optical disk, laser disk, optical disk, digital versatile disk, Blu-ray disk, or the like), a magnetic disk storage medium or other magnetic storage device, or any other medium that can be used to carry or store the desired program code in the form of instructions or data structures and can be accessed by a computer, but is not limited thereto.

The memory 703 is used to store application code for executing the solution of the present disclosure, and the execution is controlled by the processor 701. The processor 701 is used to execute the application code stored in the memory 703 to implement the content shown in the above method embodiment.

The electronic devices include, but are not limited to, mobile phones, laptop computers, digital broadcast receivers, PDAs (personal digital assistants), PADs (tablet computers), PMPs (portable multimedia players), vehicle-mounted terminals (such as vehicle-mounted navigation terminals), or the like, and fixed terminals such as digital TVs, desktop computers, etc. The electronic device shown in FIG. 7 is only an example and should not impose any limitation on the functions and scope of application of the embodiments of the present disclosure.

The embodiment of the present disclosure may be an independent physical server, or a server cluster or distributed system including multiple physical servers, or a cloud server that provides basic cloud computing services such as cloud services, cloud databases, cloud computing, cloud functions, cloud storage, network services, cloud communications, middleware services, domain name services, security services, CDN, and big data and artificial intelligence platforms. The terminal may be a smart phone, tablet computer, laptop computer, desktop computer, smart speaker, smart watch, or the like, but is not limited thereto. The terminal and the server may be directly or indirectly connected via wired or wireless communication, which is not limited by the present disclosure.

An embodiment of the present disclosure provides a computer-readable storage medium, on which a computer program is stored. When the computer-readable storage medium is run on a computer, the computer can execute the corresponding contents of the aforementioned method embodiment.

It should be understood that, although the steps in the flowchart of the accompanying drawings are displayed in sequence as indicated by the arrows, these steps are not necessarily executed in sequence in the order indicated by the arrows. Unless otherwise specified herein, there is no strict order restriction on the execution of these steps, and they can be executed in other orders. Moreover, at least a part of the steps in the flowchart of the accompanying drawings may include multiple sub-steps or multiple stages, and these sub-steps or stages are not necessarily executed at the same time, but can be executed at different times, and their execution order is not necessarily sequential, but can be executed in turn or alternately with other steps or at least a part of the sub-steps or stages of other steps.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. The computer readable signal media may also be any computer readable medium other than computer readable storage media, which may send, propagate or transmit a program for use by or in conjunction with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being installed in the electronic device.

The computer-readable medium carries one or more programs. When the one or more programs are executed by the electronic device, the electronic device executes the method shown in the above embodiment.

According to one aspect of the present disclosure, a computer program product or a computer program is provided, the computer program product or the computer program including computer instructions, the computer instructions being stored in a computer-readable storage medium. A processor of a computer device reads the computer instructions from the computer-readable storage medium, and the processor executes the computer instructions, so that the computer device executes the methods provided in the above-mentioned various optional implementations.

The computer program code for carrying out operations of the embodiment of the present disclosure may be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In cases involving a remote computer, the remote computer may be connected to the user's computer through any type of network, including a local area network (LAN) or a wide area network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each block in the flow chart or block diagram can represent a module, a program segment or a part of a code, and the module, the program segment or a part of the code contains one or more executable instructions for realizing the specified logical function. It should also be noted that in some implementations as alternatives, the functions marked in the block can also occur in a sequence different from that marked in the accompanying drawings. For example, two blocks represented in succession can actually be executed substantially in parallel, and they can sometimes be executed in the opposite order, depending on the functions involved. It should also be noted that each block in the block diagram and/or flow chart, and the combination of the blocks in the block diagram and/or flow chart can be implemented with a dedicated hardware-based system that performs a specified function or operation, or can be implemented with a combination of dedicated hardware and computer instructions.

The modules involved in the embodiments described in the present disclosure may be implemented by software or hardware. The name of a module does not limit the module itself in some cases. For example, module A may also be described as "module A for performing operation B".

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, a technical solution formed by replacing the above features with technical features with similar functions disclosed in this disclosure (but not limited thereto).

## Claims

1. A method for allocating association identifier, applied to an access point device, wherein the method comprises:
determining a first radio frame; wherein the first radio frame comprises identification information, and the identification information comprises an association identifier (AID) allocated to a station device in a sub 7 GHz frequency band and in a 45 GHz and/or a 60 GHz frequency band; and
sending the first radio frame.

2. The method for allocating association identifier according to claim 1, wherein the identification information comprises a first AID, and the first AID is an AID in the sub 7 GHz frequency band and in the 45 GHz and/or the 60 GHz frequency band;
or
the identification information comprises a second AID and a third AID, wherein the second AID is an AID in the sub 7 GHz frequency band, and the third AID is an AID in the 45 GHz and/or the 60 GHz frequency band.

3. The method for allocating association identifier according to claim 2, wherein the third AID is carried in a multi-link information element, a bandwidth information element or a neighbor report information element.

4. The method for allocating association identifier according to claim 3, wherein the neighbor report information element comprises a first identifier, and the first identifier indicates whether the third AID exists in the neighbor report information element.

5. The method for allocating association identifier according to claim 2, wherein the first AID and/or the third AID further comprises:
a connection identifier of a target connection in the 45 GHz and/or the 60 GHz frequency band;
and/or
parameter information of the target connection.

6. The method for allocating association identifier according to claim 5, wherein the method further comprises:
receiving a second radio frame in the sub 7 GHz frequency band, wherein the second radio frame comprises at least one of:
a second identifier, the connection identifier, and the parameter information;
wherein the second identifier indicates that the station device supports communication in the 45 GHz and/or the 60 GHz frequency bands.

7. The method for allocating association identifier according to claim 6, wherein the second radio frame comprises an association request frame.

8. The method for allocating association identifier according to any one of claims 1 to 7, wherein the first radio frame comprises an association response frame.

9. A method for receiving association identifier, applied to a station device, and the method comprises:
receiving a first radio frame; wherein the first radio frame comprises identification information, and the identification information comprises an association identifier (AID) allocated to the station device by an access point device in a sub 7 GHz frequency band and in a 45 GHz and/or a 60 GHz frequency band.

10. The method for receiving association identifier according to claim 9, wherein the identification information comprises a first AID, and the first AID is an AID in the sub 7 GHz frequency band and in the 45 GHz and/or the 60 GHz frequency band;
or
the identification information comprises a second AID and a third AID, wherein the second AID is an AID in the sub 7 GHz frequency band, and the third AID is an AID in the 45 GHz and/or the 60 GHz frequency band.

11. The method for receiving association identifier according to claim 10, wherein the third AID is carried in a multi-link information element, a bandwidth information element or a neighbor report information element.

12. The method for receiving association identifier according to claim 11, wherein the neighbor report information element comprises a first identifier, and the first identifier indicates whether the third AID exists in the neighbor report information element.

13. The method for receiving association identifier according to claim 10, wherein the first AID and/or the third AID further comprises:
a connection identifier of a target connection in the 45 GHz and/or the 60 GHz frequency band;
and/or
parameter information of the target connection.

14. The method for receiving association identifier according to claim 13, wherein the method further comprises:
determining a second radio frame, wherein the second radio frame comprises at least one of:
a second identifier, the connection identifier, and the parameter information;
wherein the second identifier indicates that the station device supports communication in the 45 GHz and/or the 60 GHz frequency bands.

15. The method for receiving association identifier according to claim 14, wherein the second radio frame comprises an association request frame.

16. The method for receiving association identifier according to any one of claims 9 to 15, wherein the first radio frame comprises an association response frame.

17. An electronic device, wherein the electronic device is an access point device, wherein the electronic device comprises:
a determining module, configured to determine a first radio frame; wherein the first radio frame comprises identification information, and the identification information comprises an association identifier (AID) allocated to a station device in a sub 7 GHz frequency band and in a 45 GHz and/or a 60 GHz frequency band; and
a sending module, configured to send the first radio frame.

18. An electronic device, wherein the electronic device is a station device, wherein the electronic device comprises:
a receiving module, configured to receive a first radio frame; wherein the first radio frame comprises identification information, and the identification information comprises an association identifier (AID) allocated to the station device by an access point device in a sub 7 GHz frequency band and in a 45 GHz and/or a 60 GHz frequency band.

19. An electronic device, comprising a memory, a processor and a computer program stored in the memory and executable on the processor, wherein when the program is executed on the processor, the method according to any one of claims 1 to 8 or the method according to any one of claims 9 to 16 is implemented.

20. A computer-readable storage medium, wherein a computer program is stored on the computer-readable storage medium, and when the computer program is executed by a processor, the method according to any one of claims 1 to 8 or the method according to any one of claims 9 to 16 is implemented.
